# FASCICULE DE BREVET EUROPEEN

(11) **EP 3 020 626 B1**
(45) Date de publication et mention de la délivrance du brevet: **06.06.2018**
(21) Numéro de dépôt: 15191462.9
(22) Date de dépôt: 26.10.2015
(51) Int. Cl.: B64C 1/10, B64D 13/06

(54) **AÉRONEF DOTÉ D'UN SYSTÈME DE CONDITIONNEMENT D'AIR AMÉLIORÉ**
LUFTFAHRZEUG, DAS MIT EINEM VERBESSERTEN KLIMAANLAGENSYSTEM AUSGESTATTET IST
AIRCRAFT PROVIDED WITH IMPROVED AIR-CONDITIONING SYSTEM

(30) Priorité: 06.11.2014 FR 1460716
(43) Date de publication de la demande: 18.05.2016
(73) Titulaire: AIRBUS OPERATIONS (SAS), 31060 Toulouse (FR)
(72) Inventeur: ROBILLARD, Jérôme, 31840 SEILH (FR)
(74) Mandataire: Petit, Maxime

(56) Documents cités:
- EP-A1- 1 631 326
- EP-A2- 1 964 775

## Description

### Domaine de l'invention

L'invention se rapporte à un aéronef doté d'un système de conditionnement d'air amélioré.

### Art antérieur

Généralement, un système de conditionnement d'air d'un aéronef comprenant une cabine passager, comporte un boitier de mélange (parfois appelé « AMU », de l'anglais *Air Mixer Unit)* d'un air frais et d'un air ayant déjà circulé dans ladite cabine passager, ledit boitier étant apte à acheminer l'air résultant vers ladite cabine. Un tel aéronef comporte également une cloison arrière (parfois appelée « RPB » de l'anglais *Rear Pressure Bulkhead)* séparant la cabine passager et un compartiment placé à l'arrière de ladite cabine et maintenu à la pression atmosphérique, ladite cloison étant étanche et apte à maintenir la cabine sous pression. Le document EP 1 964 775 A2 divulgue un aéronef selon le préambule de la revendication 1.

### Résumé de l'invention

Un objectif de l'invention est d'obtenir un aéronef possédant un système de conditionnement d'air amélioré, qui est peu encombrant.

L'invention a pour objet un aéronef selon la revendication 1. Selon une caractéristique possible, la cloison est plane.

Selon une caractéristique possible, la cloison est de forme convexe.

Selon une caractéristique possible, la cloison s'étend selon une direction sensiblement verticale et transversale dudit aéronef.

Selon une caractéristique possible, ladite au moins une arrivée d'air refroidi est réalisée à partir d'un prélèvement d'air en provenance d'au moins un moteur dudit aéronef, ledit air étant ensuite refroidi au moyen d'un dispositif de pré-conditionnement avant d'être acheminé vers ledit boitier.

Selon une caractéristique possible, l'arrivée d'air refroidi en provenance d'au moins un moteur de l'aéronef est matérialisée par un conduit débouchant dans une zone inférieure de la cloison de séparation.

Selon une caractéristique possible, un aéronef selon l'invention comprend au moins une arrivée d'air refroidi directement en provenance de l'extérieur de l'aéronef.

Selon une caractéristique possible, l'arrivée d'air refroidi en provenance de l'extérieur de l'aéronef est matérialisée par un conduit débouchant dans une zone inférieure de la cloison de séparation.

Selon une caractéristique possible, un aéronef selon l'invention possède au moins un moteur, chaque moteur étant monté dans une zone arrière dudit aéronef.

Selon une caractéristique possible, le boitier est délimité par deux éléments constitués par la cloison et par une paroi, au moins l'un desdits deux éléments étant revêtu d'un matériau d'insonorisation.

### Brève description des dessins

On donne, ci-après, une description détaillée d'un mode de réalisation possible d'un aéronef selon l'invention, en se référant aux figures 1 à 6.
- La figure 1 est une vue générale du dessus d'un aéronef selon l'invention,
- La figure 2 est une vue de coté de l'aéronef de la figure 1,
- La figure 3 est une vue schématique de coté d'un mode possible d'une unité de mélange d'air d'un aéronef selon l'invention,
- La figure 4 est une vue schématique en perspective de l'unité de mélange d'air de la figure 3,
- La figure 5 est une schématique de coté d'un autre mode possible d'une unité de mélange d'air d'un aéronef selon l'invention,
- La figure 6 est une vue schématique en perspective de l'unité de mélange d'air de la figure 5,

### Description détaillée

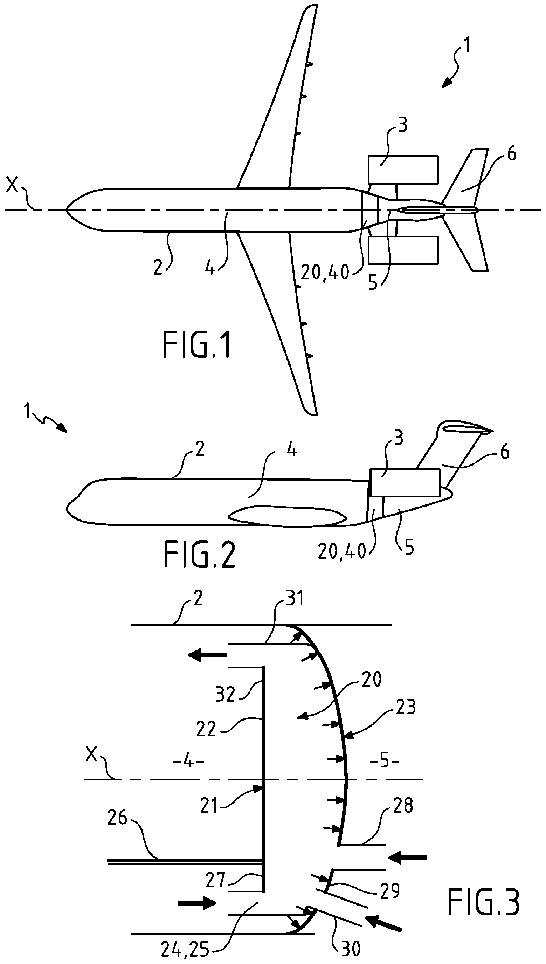

En se référant aux figures 1 et 2, un mode possible de réalisation d'un aéronef 1 selon l'invention, comprend un fuselage 2 et deux moteurs 3 montés de façon symétrique à l'arrière dudit fuselage 2. Un tel aéronef 1 possède un système de conditionnement d'air d'une cabine 4 réservée aux passagers, ledit système comprenant une unité de mélange d'air située au niveau d'une zone arrière du fuselage 2, dans une position légèrement avancée par rapport auxdits moteurs 3 et en arrière de la cabine 4. Une cloison d'étanchéité est interposée entre ladite cabine 4, qui est pressurisée, et un compartiment 5 arrière du fuselage 2 qui se retrouve à pression atmosphérique. De cette manière, la cloison contribue à maintenir un certain niveau de pression dans la cabine 4 et parvient ainsi à éviter que l'air de ventilation soufflé dans ladite cabine 4 ne soit aspiré par ledit compartiment 5. Ce compartiment 5 est compris entre la cabine 4 et la queue 6 de l'avion.

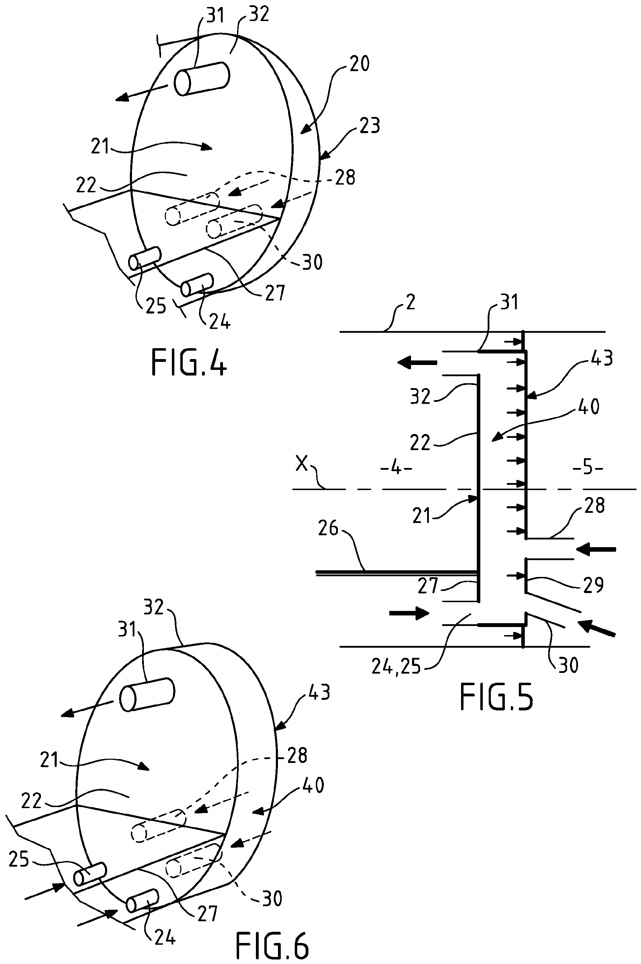

En se référant aux figures 3 et 4, selon un mode de réalisation possible d'un aéronef selon l'invention, l'unité de mélange d'air 20 comprend un boitier 21 de mélange d'air délimité par une enveloppe 22 et par la cloison d'étanchéité 23 séparant la cabine 4 et le compartiment arrière 5. De cette manière, l'unité de mélange d'air 20 comprenant ledit boitier 21 et ladite cloison 23, constitue un ensemble peu encombrant. En effet, le volume du boitier 21 étant réparti sur toute la surface de la cloison 23 (ou au moins sur une grande partie de sa surface), ce boitier 21 est relativement peu épais, et ne génère qu'un faible encombrement.

Il est à préciser que la cloison 23 constitue la paroi arrière de l'unité 20 de mélange d'air. Pour ce mode de réalisation, la cloison 23 est concave vers l'intérieur du boitier 21 et présente un axe de révolution lui conférant l'aspect d'un dôme. Cette cloison 23 s'étend dans un plan sensiblement vertical et transversal de l'aéronef 1, de sorte que son axe de révolution soit parallèle à un axe longitudinal et horizontal X dudit aéronef 1, comme le montrent les figures 1, 3 et 5. Le boitier 21 présente deux conduits 24, 25 d'arrivée d'un air qui a déjà circulé dans la cabine 4, lesdits deux conduits 24, 25 étant alignés dans un plan sensiblement horizontal. Ces deux conduits 24, 25 s'étendent sous un plancher 26 de la cabine 4, et débouchent dans l'unité de mélange 20 au niveau d'une zone inférieure 27 de l'enveloppe 22. L'unité de mélange d'air 20 comprend un premier conduit 28 d'arrivée d'un air frais, en provenance des moteurs arrières 3 de l'aéronef 1 et débouchant dans ladite unité 20 au niveau d'une zone inférieure 29 de la cloison 23. Plus précisément, l'air ainsi prélevé au niveau desdits moteurs 3 est chaud, et est ensuite refroidi et mis à un niveau de pression souhaité par un dispositif de pré-conditionnement, avant de déboucher dans l'unité de mélange d'air 20. Cette arrivée d'air est donc opérationnelle, uniquement lorsque les moteurs 3 de l'aéronef 1 tournent, c'est-à-dire principalement en phase de vol. L'unité de mélange d'air 20 possède également un deuxième conduit 30 d'arrivée d'air frais, en provenance de l'extérieur de l'aéronef 1, et débouchant dans ladite unité 20 au niveau d'une zone inférieure 29 de la cloison 23. Le flux d'air ainsi prélevé à l'extérieur de l'aéronef 1 est acheminé vers l'unité de mélange 20. Ce deuxième conduit 30 d'arrivée d'air frais, peut être utilisé lorsque l'aéronef 1 est au sol et que les moteurs 3, éteints, ne sont pas en mesure d'envoyer de l'air dans le premier conduit 28, ou pour palier une défaillance du circuit d'alimentation en air frais faisant intervenir ledit premier conduit 28. L'unité de mélange d'air 20 comporte également un conduit de sortie 31, apte à acheminer vers la cabine 4, un air recombiné, issu du mélange de l'air ayant déjà circulé dans ladite cabine 4 (air recyclé) et de l'air refroidi prélevé au niveau des moteurs 3. En effet, ladite unité 20 comporte un dispositif de mélange, basé par exemple sur un système de déflecteurs et ou d'éléments générateurs de tourbillons (vortex), destiné à mélanger intimement ces deux sources 24, 25 et 28 d'air, avant de renvoyer l'air résultant vers la cabine 4. Ce conduit de sortie 31 prend naissance au niveau d'une zone supérieure 32 de l'enveloppe 22 du boitier 21 et s'étend horizontalement au niveau d'un plafond de la cabine 4.

L'unité de mélange 20 est délimitée par deux éléments, à savoir l'enveloppe 22 du boitier 21 et la cloison étanche 23. Préférentiellement, au moins l'un de ces deux éléments 22, 23 possède un matériau d'insonorisation déposé sur au moins l'une de ses surfaces. Ce matériau d'insonorisation est de préférence déposé sur une surface de l'enveloppe 22 du boitier 21, pour isoler la cabine du bruit produit par l'unité de mélange 20.

L'enveloppe 22 du boitier 21 comporte des capteurs pour notamment mesurer en continu, la température et la pression à l'intérieur de l'unité de mélange 20, de manière à contrôler les paramètres thermodynamiques de ladite unité et ainsi prévenir tout type d'incident.

Les différentes flèches apparaissant sur la figure 3 matérialisent le sens des différents flux d'air entrant ou sortant de l'unité de mélange 20, par les différents conduits 24, 25, 28, 30, 31 débouchant dans le boitier 21 et la cloison 23.

En se référant aux figures 5 et 6, un autre mode de réalisation possible d'un aéronef 1 selon l'invention, se distingue du mode de réalisation possible décrit ci-avant, par le fait que la cloison étanche 43 n'est plus incurvée mais est plane, tous les autres éléments étant intégralement conservés. De cette manière, cette cloison 43 s'inscrit dans un plan vertical et transversal de l'aéronef 1.

En se référant à la figure 6, en raison de la forme de la cloison étanche 43, l'unité de mélange 40 adopte sensiblement une géométrie cylindrique, l'enveloppe 22 du boitier 21 et la cloison 43 recevant les différents conduits d'arrivée 24, 25, 28, 30 et le conduit de sortie 31 de façon identique à ce qui a été décrit pour le mode de réalisation possible décrit ci-avant. Avec ce mode de réalisation particulier impliquant une cloison étanche 43 plane, le gain de place dans l'aéronef est plus important que celui obtenu avec une cloison incurvée 23.

Un aéronef selon l'invention présente l'avantage de posséder un système de conditionnement d'air comprenant une unité de mélange qui est compacte et donc peu encombrante, permettant de libérer un espace significatif dans ledit aéronef. Cet espace vacant peut par exemple être consacré à la mise en place d'une rangée supplémentaire de sièges pour les passagers. Il peut également être aménagé en espace de commodité pour les passagers, sous la forme par exemple de toilettes. Dans d'autres cas, il est possible de libérer de l'espace de stockage de fret, dans l'espace qui était antérieurement occupé par l'unité de mélange.

Il a de plus l'avantage de combiner dans un même ensemble des éléments ayant des fonctions différentes, à savoir le boitier de mélange et la cloison étanche, ce qui permet d'utiliser certains éléments pour plusieurs fonctions. Il en résulte un gain de masse de l'aéronef, la masse de l'ensemble faisant office de boitier de mélange et de cloison étanche pouvant être inférieure à la somme des masses d'une cloison étanche et d'un boitier de mélange de l'art antérieur.

Il en résulte une réduction des coûts de fabrication.

En conclusion, la cloison 23, 43 et le boitier 21 de mélange sont regroupés dans l'aéronef 1, pour constituer un ensemble compact et peu encombrant, libérant ainsi de l'espace pour ajouter par exemple une rangée supplémentaire de sièges. De plus, un tel arrangement compact permet de raccourcir, voire d'éliminer, certains conduits de circulation d'air. En particulier, quand les moteurs 3 de l'aéronef sont situés au niveau de la queue de l'appareil, le positionnement du boitier de mélange 21 au niveau de la cloison étanche 23, 43 arrière de la cabine 4 permet de raccourcir les conduits de circulation de l'air entre les prises d'air situées au niveau du moteur 3 et le boitier de mélange 21. Il en résulte un meilleur contrôle des conditions de mélange d'air, et de la distribution de l'air dans la cabine 4. La cloison 23, 43 est configurée pour éviter tout échange d'air direct entre le compartiment 5 et la cabine 4.

## Revendications

1. Aéronef (1) comprenant une cabine (4) et un système de conditionnement d'air de ladite cabine (4),
- ledit système de conditionnement d'air comportant un boitier (21) de mélange d'air doté d'au moins une arrivée (28, 30) d'air refroidi, d'au moins une arrivée (24, 25) d'air ayant déjà circulé dans la cabine (4) et d'au moins une sortie (31) permettant d'alimenter en air mélangé ladite cabine (4) et,
- ledit aéronef comportant une cloison (23, 43) de séparation étanche, placée entre la cabine (4) et un compartiment (5) situé à l'arrière de ladite cabine (4) et permettant de maintenir ladite cabine sous pression, ladite cloison (23, 43) constituant une paroi délimitant au moins partiellement le boitier (21) de mélange,
**caractérisé en ce que** l'arrivée (24, 25) d'air ayant déjà circulé dans la cabine (4) est matérialisée par un conduit (24, 25) placé sous un plancher (26) de la cabine (4), et débouchant dans une zone inférieure (27) du boitier (21) de mélange, et **en ce que** la sortie d'alimentation en air de la cabine (4) est matérialisée par un conduit (31) prenant naissance au niveau d'une zone supérieure (32) du boitier (21) de mélange et s'étendant dans un plafond de la cabine (4).

2. Aéronef selon la revendication 1, **caractérisé en ce que** la cloison (43) est plane.

3. Aéronef selon la revendication 1, **caractérisé en ce que** la cloison (23) est de forme convexe.

4. Aéronef selon l'une quelconque des revendications 1 à 3, **caractérisé en ce que** la cloison (23, 43) s'étend selon une direction sensiblement verticale et transversale dudit aéronef (1).

5. Aéronef selon l'une quelconque des revendications 1 à 4, caractérisé en ce ladite au moins une arrivée (28) d'air refroidi est réalisée à partir d'un prélèvement d'air en provenance d'au moins un moteur (3) dudit aéronef (1), ledit air étant ensuite refroidi au moyen d'un dispositif de pré-conditionnement avant d'être acheminé vers ledit boitier (21).

6. Aéronef selon la revendication 5, **caractérisé en ce que** l'arrivée d'air refroidi en provenance d'au moins un moteur (3) de l'aéronef (1) est matérialisée par un conduit (28) débouchant dans une zone inférieure (29) de la cloison (23, 43) de séparation.

7. Aéronef selon l'une quelconque des revendications 1 à 6, **caractérisé en ce qu'**il comprend au moins une arrivée (30) d'air refroidi directement en provenance de l'extérieur de l'aéronef (1).

8. Aéronef selon la revendication 7, **caractérisé en ce que** l'arrivée d'air refroidi en provenance de l'extérieur de l'aéronef (1) est matérialisée par un conduit (30) débouchant dans une zone inférieure (29) de la cloison (23, 43) de séparation.

9. Aéronef selon l'une quelconque des revendications 1 à 8, **caractérisé en ce qu'**il possède au moins un moteur (3), chaque moteur (3) étant monté dans une zone arrière dudit aéronef (1).

10. Aéronef selon l'une quelconque des revendications 1 à 9, **caractérisé en ce que** le boitier est délimitée par deux éléments constitués par la cloison et par une paroi, et **en ce qu'**au moins l'un desdits deux éléments est revêtu d'un matériau d'insonorisation.

## Patentansprüche

1. Luftfahrzeug (1), umfassend eine Kabine (4) und ein Luftkonditionierungssystem der Kabine (4),
- wobei das Luftkonditionierungssystem ein Luftmischgehäuse (21) aufweist, das mit mindestens einem Einlass (28, 30) gekühlter Luft, mindestens einem Einlass (24, 25) von Luft, die bereits in der Kabine (4) zirkuliert hatte, und mindestens einem Auslass (31) ausgestattet ist, der erlaubt, die Kabine (4) mit gemischter Luft zu versorgen, und
- wobei das Luftfahrzeug eine dichte Trennwand (23, 43) aufweist, platziert zwischen der Kabine (4) und einem Abteil (5), das sich hinter der Kabine (4) befindet und erlaubt, die Kabine unter Druck zu halten, wobei die Trennwand (23, 43) eine Wand bildet, die mindestens teilweise den Mischkasten (21) begrenzt,
**dadurch gekennzeichnet, dass** der Einlass (24, 25) von Luft, die bereits in der Kabine (4) zirkuliert hatte, von einer Leitung (24, 25) materialisiert ist, die unter einem Boden (26) der Kabine (4) platziert ist und in eine untere Zone (27) des Mischkastens (21) ausmündet, und dass der Auslass der Luftversorgung der Kabine (4) von einer Leitung (31) materialisiert ist, deren Ausgangspunkt im Bereich einer oberen Zone (32) des Mischkastens (21) liegt und sich in einer Decke der Kabine (4) erstreckt.

2. Luftfahrzeug nach Anspruch 1, **dadurch gekennzeichnet, dass** die Trennwand (43) eben ist.

3. Luftfahrzeug nach Anspruch 1, **dadurch gekennzeichnet, dass** die Trennwand (23) konvex ist.

4. Luftfahrzeug nach einem der Ansprüche 1 bis 3, **dadurch gekennzeichnet, dass** sich die Trennwand (23, 43) gemäß einer etwa vertikalen und transversalen Richtung des Luftfahrzeugs (1) erstreckt.

5. Luftfahrzeug nach einem der Ansprüche 1 bis 4, **dadurch gekennzeichnet, dass** der mindestens eine Einlass (28) gekühlter Luft, ausgehend von einer Entnahme von Luft, von mindestens einem Motor (3) des Luftfahrzeugs (1) kommend, umgesetzt ist, wobei die Luft dann mittels einer Vorkonditionierungsvorrichtung gekühlt wird, bevor sie zu dem Gehäuse (21) geleitet wird.

6. Luftfahrzeug nach Anspruch 5, **dadurch gekennzeichnet, dass** der Einlass gekühlter Luft, von mindestens einem Motor (3) des Luftfahrzeugs (1) kommend, durch eine Leitung (28) materialisiert ist, die in eine untere Zone (29) der Trennwand (23, 43) ausmündet.

7. Luftfahrzeug nach einem der Ansprüche 1 bis 6, **dadurch gekennzeichnet, dass** es mindestens einen Einlass (30) gekühlter Luft, direkt von außerhalb des Luftfahrzeugs (1) kommend, umfasst.

8. Luftfahrzeug nach Anspruch 7, **dadurch gekennzeichnet, dass** der Einlass gekühlter Luft, von außerhalb des Luftfahrzeugs (1) kommend, durch eine Leitung (30) materialisiert ist, die in eine untere Zone (29) der Trennwand (23, 43) ausmündet.

9. Luftfahrzeug nach einem der Ansprüche 1 bis 8, **dadurch gekennzeichnet, dass** es mindestens einen Motor (3) besitzt, wobei jeder Motor (3) in einer hinteren Zone des Luftfahrzeugs (1) montiert ist.

10. Luftfahrzeug nach einem der Ansprüche 1 bis 9, **dadurch gekennzeichnet, dass** das Gehäuse von zwei Elementen begrenzt ist, die von der Trennwand und von einer Wand gebildet sind, und dass mindestens eines der zwei Elemente mit einem schalldämmenden Material verkleidet ist.

## Claims

1. An aircraft (1) comprising a cabin (4) and an air conditioning system for said cabin (4),
- said air-conditioning system comprising a housing (21) for mixing air provided with at least one intake (28, 30) for cooled air, at least one intake (24, 25) for air already having circulated in the cabin (4) and at least one outlet (31) making it possible to supply said cabin (4) with mixed air, and
- said aircraft including a sealed separating partition (23, 43), placed between the cabin (4) and a compartment (5) situated at the rear of said cabin (4) and making it possible to keep said cabin pressurized, said partition (23, 43) constituting a wall at least partially delimiting the mixing housing (21),
**characterized in that** the intake (24, 25) for air already having circulated in the cabin (4) is embodied by a duct (24, 25) placed below a floor (26) of the cabin (4), and emerging in a lower zone (27) of the mixing housing (21), and **in that** the outlet for supplying air to the cabin (4) is embodied by a duct (31) originating at an upper zone (32) of the mixing housing (21) and extending in a ceiling of the cabin (4).

2. The aircraft according to claim 1, **characterized in that** the partition (43) is planar.

3. The aircraft according to claim 1, **characterized in that** the partition (23) is convex.

4. The aircraft according to any one of claims 1 to 3, **characterized in that** the partition (23, 43) extends in a substantially vertical and transverse direction with respect to said aircraft (1).

5. The aircraft according to any one of claims 1 to 4, **characterized in that** said at least one intake (28) for cooled air is made from a withdrawal of air coming from at least one engine (3) of said aircraft (1), said air next being cooled using a preconditioning device before being conveyed toward the housing (21).

6. The aircraft according to claim 5, **characterized in that** the intake for cooled air coming from at least one engine (3) of the aircraft (1) is embodied by a duct (28) emerging in a lower zone (29) of the separating partition (23, 43).

7. The aircraft according to any one of claims 1 to 6, **characterized in that** it comprises at least one intake (30) for cooled air coming directly from outside the aircraft (1).

8. The aircraft according to claim 7, **characterized in that** the intake for cooled air coming from outside the aircraft (1) is embodied by a duct (30) emerging in a lower zone (29) of the separating partition (23, 43).

9. The aircraft according to any one of claims 1 to 8, **characterized in that** it has at least one engine (3), each engine (3) being mounted in a rear zone of said aircraft (1).

10. The aircraft according to any one of claims 1 to 9, **characterized in that** the housing is delimited by two elements made up of the partition and a wall, and **in that** at least one of said two elements is covered with a soundproofing material.
